# EUROPEAN PATENT APPLICATION

(11) **EP 2 975 889 A1**
(43) Date of publication of application: **20.01.2016**
(21) Application number: 13877534.1
(22) Date of filing: 11.03.2013
(51) Int. Cl.: H04W 56/00

(54) **D2D DISCOVERY SEQUENCE DETECTING METHOD AND D2D DATA RECEIVING METHOD AND DEVICE**

(71) Applicant: Fujitsu Limited, Kawasaki-shi, Kanagawa 211-8588 (JP)
(72) Inventor: WANG, Yi, Beijing 100025 (CN); LI, Hongchao, Beijing 100025 (CN); ZHANG, Lei, Beijing 100025 (CN)
(74) Representative: Lewin, David Nicholas
(86) International application number: PCT/CN2013/072394
(87) International publication number: WO 2014/139072

(57) **Abstract**

a method and an apparatus for detecting D2D discovery sequences, and a method and an apparatus for receiving D2D data. The detecting method includes determining, by D2D UE, a starting point of a time window for detecting discovery sequences, according to uplink transmission timing of an uplink between the D2D UE and an eNB of an LTE system and detecting discovery sequences of other D2D UEs by the D2D UE at the determined starting point of the time window. With the method and the apparatus of the embodiments of the present disclosure, the complexity of detecting, by UE, discovery sequences of other UEs can be reduced, the time of detecting, by UE, discovery sequences of other UEs can be shortened, and signaling for reporting, by UE, detection information of discovery sequences can be reduced.

## Description

### Technical Field

The present disclosure relates to the field of wireless communications and, in particular to, when Device-to-Device (D2D) User Equipment (UE) exists in a wireless communication system, a method and an apparatus for detecting D2D discovery sequences, and a method and an apparatus for receiving D2D data.

### Background

In current cellular network system, the UE communicates with other UEs through a base station (BS), e.g., evolved Node B (eNB) operating as a centralized controller. No matter the communicating UEs are located far away from each other or near to each other, interference control and resource management of a cell are both handled by an eNB. An advantage of centralized control by an eNB lies in capable of optimizing globally interference control and radio resource control, and a disadvantage thereof lies in not capable of effectively using resources in some scenarios. For example, compared to direct communication between UEs in proximity of each other, the communication between UEs through an eNB needs to consume twice as many resources. Moreover, in some hotspot zones, the service payload is very large, thereby resulting in severe overload in the eNB; at this time, if direct communications between UEs in geographical proximity of each other, the payload of the eNB can be relieved. Therefore, the concept of D2D is produced, and D2D means direct communication between UEs in proximity of each other.

Currently, The 3rd Generation Partnership Project (3GPP) has started the study on D2D based on Long Term Evolution (LTE) system. D2D scenarios fall into two categories: one is a social network, for example, the business/social services, advertising and on-line gaming in geographical proximity of each other; the other is public safety. For the D2D study on the social network, currently, it generally defined in D2D within network coverage, that is, D2D discovery and communication could be partially dependent on assistance of an eNB; and for the D2D study on the public safety, generally, due to UE itself in a very harsh environment or damage to the network infrastructure, in this case the UE is without the network coverage, and in this situation, direct D2D discovery and communication with UE outside of the network coverage need to rely on other UE within the network coverage acting as a relay node, or direct D2D discovery and communication with UE without the network coverage need to use radio resources preconfigured before the network damage.

D2D communication is generally performed between UE in geographical proximity of each other, and the UE has the ability to discover other UE and it can also be discoverable by other UE. No matter which type the D2D scenario is, the prerequisite of the D2D communication is that the UE can discover other UEs capable of performing D2D communications around the UE. In the current study, how to design discovery sequences of D2D communications has become a hot study topic, and however, for a clock problem when receiving discovery sequences by D2D UE, it is barely mentioned in the current study.

The inventors found in the process of carrying out the invention that, different from downlink timing in an LTE system, it may need, when D2D UE is receiving discovery sequences, to simultaneously detect discovery sequences of multiple D2D UE, and it only needs, when ordinary UE is detecting a downlink synchronization signal of an eNB, to distinguish the strongest one of downlink synchronization signals and to establish downlink synchronization therewith. And, different from uplink timing in an LTE system, it often does not, when D2D UE is transmitting discovery sequences, establish "downlink synchronization" with corresponding D2D UE, and thus transmission time of the corresponding D2D discovery sequences cannot be determined on the basis of "downlink timing", and the D2D UE receiving the D2D discovery sequences cannot also determine a reasonable receiving time window according to its own "downlink transmission time". Therefore, it is necessary to design a new mechanism about transmission timing, receiving timing for UE performing D2D communications, such that discovery sequences can be accurately and efficiently demodulated.

Furthermore, when connection between D2D UEs is established, in order to ensure the normal transmission/receiving of data between D2D UEs, it needs a corresponding mechanism about transmission/receiving timing. Considering the robustness of the communication channel between D2D UEs and the complexity of D2D UE communication, timing accuracy between D2D UEs could be less accurate compared to uplink timing accuracy of UEs in the LTE system, and therefore, it also is necessary to study the transmission/receiving timing mechanism with moderate complexity.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

The object of embodiments of the present disclosure is to provide a method and an apparatus for detecting D2D discovery sequences, and a method and an apparatus for receiving D2D data, such that UE with a D2D function (referred to as D2D user or D2D device) can more accurately, efficiently and correctly detect discovery sequences when monitoring D2D discover sequences of other UEs and can demodulate data with higher time accuracy when receiving data transmitted by other D2D UE.

According to the first aspect of the embodiments of the present disclosure, there is provided a method for detecting D2D (Device to Device) discovery sequences, including:
determining, by D2D UE (User Equipment), a starting point of a time window for detecting discovery sequences, according to uplink transmission timing of an uplink between the D2D UE and an eNB of an LTE (Long Term Evolution) system; and
detecting discovery sequences of other D2D UEs by the D2D UE at the determined starting point of the time window.

According to the second aspect of the embodiments of the present disclosure, there is provided a method for detecting D2D discovery sequences, including:
determining, by D2D UE, starting and terminating positions of a time window for detecting discovery sequences, according to uplink transmission timing of an uplink between the D2D UE and an eNB of an LTE system and received configuration information of a receiving window; and
detecting discovery sequences of other D2D UEsby the D2D UE at the determined starting and terminating positions of the time window.

According to the third aspect of the embodiments of the present disclosure, there is a provided D2D UE, including:
) a determining unit configured to determine a starting point of a time window for detecting discovery sequences, according to uplink transmission timing of an uplink between the D2D UE and an eNB of an LTE system; and
a detecting unit configured to detect discovery sequences of other D2D UEs at the starting point of the time window determined by the determining unit.

According to the fourth aspect of the embodiments of the present disclosure, there is a provided D2D UE, including:
a first determining unit configured to determine starting and terminating positions of a time window for detecting discovery sequences, according to uplink transmission timing of an uplink between the UE and an eNB of an LTE system and received configuration ) information of a receiving window; and
a detecting unit configured to detect discovery sequences of other D2D UEs at the starting and terminating positions of the time window determined by the first determining unit.

According to the fifth aspect of the embodiments of the present disclosure, there is provided a method for receiving D2D data, including:
determining receiving timing of the D2D data by UE according to a preconfigured receiving reference time or a predetermined rule; and
receiving the D2D data by the UE according to the determined receiving timing of the D2D data.

According to the sixth aspect of the embodiments of the present disclosure, there is provided a D2D UE, including:
a determining unit configured to determine receiving timing of D2D data according to a preconfigured receiving reference time or a predetermined rule; and
a receiving unit configured to receive the D2D data according to the receiving timing of the D2D data determined by the determining unit.

According to the seventh aspect of the embodiments of the present disclosure, there is provided a method for configuring a receiving window of D2D discovery sequences, including:
configuring a receiving window by an eNB in an LTE system for UE within its coverage in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

According to the eighth aspect of the embodiments of the present disclosure, there is provided an eNB in an LTE system, including:
a configuring unit configured to configure a receiving window for UE within a coverage of the eNB in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

According to the ninth aspect of the embodiments of the present disclosure, there is provided a method for configuring a receiving reference time of D2D data, including:
configuring a receiving reference time by an eNB in an LTE system for UE within its coverage in D2D communication via high-layer signaling or dynamic signaling of a physical layer, so that the UE determines a receiving time for receiving D2D communication data according to configuration information of the receiving reference time.

According to the tenth aspect of the embodiments of the present disclosure, there is provided an eNB in an LTE system, including:
a configuring unit configured to configure a receiving reference time for UE within a coverage of the eNB in D2D communication via high-layer signaling or dynamic signaling of a physical layer, so that the UE determines a receiving time for receiving D2D communication data according to configuration information of the receiving reference time.

According to the eleventh aspect of the embodiments of the present disclosure, there is provided a communication system, including at least one UE as described in any one of the third aspect, the fourth aspect, and the sixth aspect, or including at least one UE as described in any one of the third aspect, the fourth aspect, and the sixth aspect and the eNB as described in any one of the eighth aspect and the tenth aspect.

According to still another aspect of the embodiments of the present disclosure, there is provided a computer-readable program, wherein when the program is executed in terminal equipment, the program enables a computer to carry out the method for detecting D2D discovery sequences as described in any one of the first aspect and the second aspect, or the method for receiving D2D data as described in the fifth aspect, in the terminal equipment.

According to still another aspect of the embodiments of the present disclosure, there is provided a storage medium in which a computer-readable program is stored, wherein the computer-readable program enables a computer to carry out the method for detecting D2D discovery sequences as described in any one of the first aspect and the second aspect, or the method for receiving D2D data as described in the fifth aspect, in terminal equipment.

According to still another aspect of the embodiments of the present disclosure, there is provided a computer-readable program, wherein when the program is executed in an eNB, the program enables a computer to carry out the method for configuring a receiving window of D2D discovery sequences as described in the seventh aspect, or the method for configuring a receiving reference time of D2D data as described in the ninth aspect, in the eNB.

According to still another aspect of the embodiments of the present disclosure, there is provided a storage medium in which a computer-readable program is stored, wherein the computer-readable program enables a computer to carry out the method for configuring a receiving window of D2D discovery sequences as described in the seventh aspect, or the method for configuring a receiving reference time of D2D data as described in the ninth aspect, in an eNB.

An advantage of the embodiments of the present disclosure exists in that, with the method and the apparatus of the embodiments of the present disclosure, the complexity of detecting, by UE, discovery sequences of other UEs can be reduced, the time of detecting, by UE, discovery sequences of other UEs can be shortened, and signaling for reporting, by UE, detection information of discovery sequences can be reduced.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated in size.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
Figure 1 is a flowchart of the method for detecting D2D discovery sequences of Embodiment 1 of the present disclosure;
Figure 2 is a flowchart of the method for detecting D2D discovery sequences of Embodiment 2 of the present disclosure;
Figure 3 is a flowchart of the method for configuring a receiving window of D2D discovery sequences of Embodiment 3 of the present disclosure;
Figure 4 is a schematic diagram of detecting D2D discovery sequences according to the configured receiving window;
Figure 5 is a schematic diagram of a detection algorithm based on the cyclically shifted discovery sequences;
Figure 6 is a schematic diagram of the structure of the D2D UE of Embodiment 4 of the present application;
Figure 7 is a schematic diagram of the structure of the D2D UE of Embodiment 5 of the present application;
Figure 8 is a schematic diagram of the structure of the eNB of Embodiment 6 of the present application;
Figure 9 is a flowchart of the method for receiving D2D data of Embodiment 7 of the present disclosure;
Figure 10 is a flowchart of the method for configuring a receiving reference time of D2D data of Embodiment 8 of the present disclosure;
Figures 11a-11b are schematic diagrams of configuring, by an eNB, a receiving reference time for UE located in the center of a cell;
Figures 12a-12c are schematic diagrams of configuring, by an eNB, a receiving reference time for UE located in the edge of a cell;
Figure 13 is a schematic diagram of the structure of the D2D UE of Embodiment 9 of the present application; and
Figure 14 is a schematic diagram of the structure of the eNB of Embodiment 10 of the present application.

### Detailed Description

These and further features of the present disclosure will be apparent with reference to the following description and attached drawings. These embodiments are illustrative only and are not intended to limit the present disclosure. For easy understanding of the principle and embodiments of the present disclosure by those skilled in the art, a method and an apparatus for detecting D2D discovery sequences, and a method and an apparatus for receiving D2D data in the embodiments of the present disclosure shall be described taking an LTE system as an example. However, it should be understood that the present disclosure is not limited thereto, and is applicable to other systems related to D2D communication.

### Embodiment 1

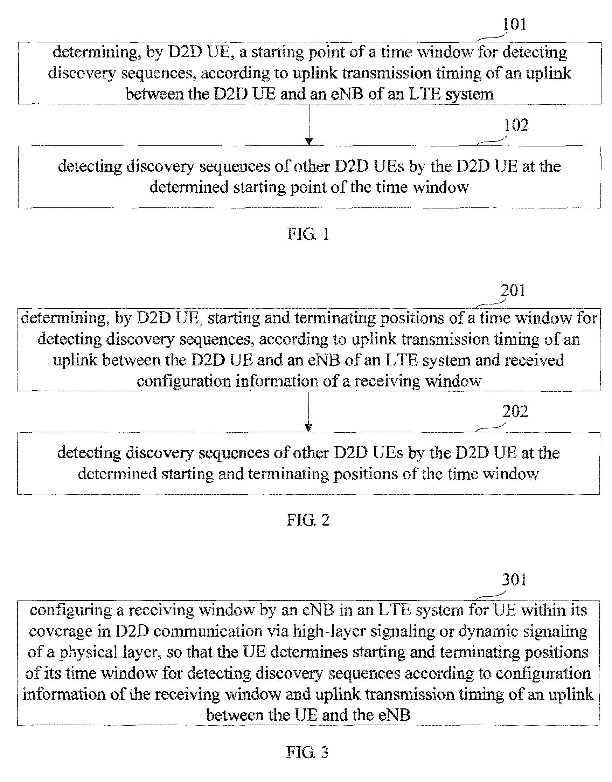

An embodiment of the present disclosure provides a method for detecting D2D discovery sequences. Fig. 1 is a flowchart of the method. As shown in Fig. 1, the method includes:
step 101: determining, by D2D UE, a starting point of a time window for detecting discovery sequences, according to uplink transmission timing of an uplink between the D2D UE and an eNB of an LTE system;
wherein, the D2D UE can take the uplink transmission timing of the uplink between it and the eNB of the LTE system as the starting point of the time window for detecting discovery sequences, and also can take a predetermined time offset of the uplink transmission timing of the uplink between it and the eNB of the LTE system as the starting point of the time window for detecting discovery sequences.
step 102: detecting discovery sequences of other D2D UEs by the D2D UE at the determined starting point of the time window.

In this embodiment, the uplink transmission timing of the uplink between the D2D UE and the eNB of the LTE system is taken as the starting point of the time window for detecting, by the D2D UE, discovery sequences of other D2D UEs; or taking the uplink transmission timing of the uplink between the D2D UE and the eNB of the LTE system as a reference, combined with the predetermined time offset is taken as the starting point of the time window for detecting, by the D2D UE, discovery sequences of other D2D UEs, and when the D2D UE detects discovery sequences of other D2D UEs, it can detect the discovery sequences of other D2D UEs at the starting point of the time window determined thereby.

In this embodiment, the predetermined time offset can be predetermined by each D2D UE according to the distance between it and the eNB, also can be preconfigured through signaling or dynamically configured by the eNB according to the distance between the eNB and the D2D UE, and also can be predetermined by each D2D UE by considering a uplink timing error, and this embodiment of the present disclosure is not limited thereto.

With the method of this embodiment, a time window for detecting discovery sequences is defined, thereby reducing the complexity of detecting, by UE, discovery sequences of other UEs, and shortening the time of detecting, by UE, discovery sequences of other UEs.

### Embodiment 2

An embodiment of the present disclosure provides a method for detecting D2D discovery sequences. Fig. 2 is a flowchart of the method. As shown in Fig. 2, the method includes:
step 201: determining, by D2D UE, starting and terminating positions of a time window for detecting discovery sequences, according to uplink transmission timing of an uplink between the D2D UE and an eNB of an LTE system and received configuration information of a receiving window; and
step 202: detecting discovery sequences of other D2D UEs by the D2D UE at the determined starting and terminating positions of the time window.

In this embodiment, a receiving window is configured for D2D UE by the eNB, and the D2D UE detects discovery sequences of other D2D UEs according to uplink transmission timing of the uplink between the D2D UE and the eNB of the LTE system and the receiving window configured by the eNB.

In an implementation, the configuration information of the receiving window is a total length of a backward received signal along a time axis direction taking the uplink transmission timing as the starting position of the time window, i.e., detecting a total length of a signal.

In another implementation, the configuration information of the receiving window is a maximum offset of a starting point of a backward received signal along a time axis direction taking the uplink transmission timing as the starting position of the time window, i.e., detecting the maximum offset of a signal with respect to the starting point of the receiving window.

In this embodiment, the configuration information of the receiving window can be configured by the eNB via high-layer signaling or can be configured by the eNB via dynamic signaling of a physical layer, and this embodiment of the present disclosure is not limited thereto. Furthermore, the signaling for carrying the configuration information of the receiving window can be UE-specific, that is, each UE corresponds to configuration information of one receiving window; or the signaling can be cluster-specific, that is, each cluster of UE corresponds to configuration information of one receiving window.

In this embodiment, if the D2D UE detects discovery sequences out of the time window, an implementation of this embodiment is as follows: the D2D UE determines, according to a predetermined threshold value, whether signal intensities of the discovery sequences detected out of the time window exceed a predetermined threshold value; wherein, if the predetermined threshold value is exceeded, the discovery sequences detected out of the time window are taken as selected objects, and a predetermined number of discovery sequences (one or more) of highest signal intensity is selected from all the detected discovery sequences (including the discovery sequences detected within the time window and the discovery sequences detected out of the time window of the signal intensities of which exceed the predetermined threshold value) to report to the eNB or corresponding D2D UE; and another implementation is as follows: although the D2D UE detects discovery sequences out of the time window, the discovery sequences are not taken as selected objects, that is, information on the discovery sequences is not reported, and a predetermined number of discovery sequences of highest signal intensity is selected from all the discovery sequences detected within the time window to report to the eNB or corresponding D2D UE, thereby saving reported overhead of unnecessary information.

With the method of this embodiment, a time window for detecting discovery sequences is defined, thereby reducing the complexity of detecting, by UE, discovery sequences of other UEs, shortening the time of detecting, by UE, discovery sequences of other UEs, and reducing signaling for reporting, by UE, detection information of discovery sequences.

### Embodiment 3

An embodiment of the present disclosure provides a method for configuring a receiving window in D2D communication. Fig. 3 is a flowchart of the method. As shown in Fig. 3, the method includes:
step 301: configuring a receiving window by an eNB in an LTE system for UE within its coverage in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

In this embodiment, the configuration information of the receiving window can be UE-specific, that is, one receiving window is configured for each UE by the eNB, and the receiving window of each UE can be the same or be different; or the configuration information can be cluster-specific, that is, one receiving window is configured for each cluster of UE by the eNB, and the receiving window of each cluster of UE is the same and the receiving windows of different clusters of UE can be the same or be different.

In this embodiment, the configuration information of the receiving window can be a total length of a backward received signal along a time axis direction taking the uplink transmission timing of the uplink between the UE and the eNB as the starting point of the time window, and also can be a maximum offset of a starting point of a backward received signal along a time axis direction taking the uplink transmission timing of the uplink between the UE and the eNB as the starting point of the time window.

In this embodiment, the eNB can additionally configure, for the above-mentioned UE, a threshold value for determining whether the discovery sequences detected out of the receiving window are taken as selected objects via high-layer signaling or dynamic signaling of a physical layer.

With the method of this embodiment, a receiving window is configured for UE performing D2D communication, the UE can determine a time window for detecting D2D discovery sequences according to the configured receiving window and the uplink transmission timing of the uplink between the UE and an eNB in an LTE system, and detect the discovery sequences at the determined time window, thereby reducing the complexity of detecting, by UE, discovery sequences of other UEs, shortening the time of detecting, by UE, discovery sequences of other UEs, and reducing signaling for reporting, by UE, detection information of discovery sequences.

In order to make the methods in Embodiments 2 and 3 more clear and understandable, the methods in Embodiments 2 and 3 will be described in combination with specific examples hereinafter.

### Example I

This example shows that an eNB configures a receiving window for UE via high-layer signaling.

UE keeps connecting to an eNB in an LTE system. When the UE has a requirement to perform D2D communication (the requirement can be initiated by the UE, and also can be initiated by other UE), the eNB assistants the UE to establish D2D connection, that is, transmission or reception of discovery sequences is first performed.

For example, the eNB can configure resources for performing, by the UE, the transmission or the reception of D2D discovery sequences and/or other necessary information for performing D2D communication by the UE via high-layer signaling. In this example, the eNB simultaneously configures, for the UE, related information of the receiving window for detecting discovery sequences. For example, the length of the receiving window can be set by taking a sampling point as a unit or taking a certain preset step length as a unit and can be one of several preset window lengths.

For example, the eNB also can configure, for the UE, related information of the receiving window for detecting discovery sequences via single high-layer signaling.

For example, the eNB also can configure a corresponding threshold value for detecting while configuring related information of the receiving window via the high-layer signaling, so that the UE can determine whether the discovery sequences detected out of the time window are taken as selected objects according the threshold value for detecting.

### Example II

This example shows that an eNB configures a receiving window for UE via dynamic signaling of a physical layer.

UE keeps connecting to an eNB in an LTE system. When the UE has a requirement to perform D2D communication (the requirement can be initiated by the UE, and also can be initiated by other UE), the eNB assistants the UE to establish D2D connection, that is, transmission or reception of discovery sequences is first performed.

For example, the eNB can carry related information of the receiving window for detecting discovery sequences configured for the UE via a PDCCH/ePDCCH. For example, the length of the receiving window can be set by taking a sampling point as a unit or taking a certain preset step length as a unit and can be one of several preset window lengths. Preferably, four different window lengths can be preset and dynamically indicated by 2 bits.

For example, the eNB also can configure a corresponding threshold value for detecting via the PDCCH/ePDCCH while configuring related information of the receiving window via the PDCCH/ePDCCH, so that the UE can determine whether the discovery sequences detected out of the time window are taken as selected objects according the threshold value for detecting.

For example, if the eNB carries other necessary information of D2D connection via some resources in the PDCCH/ePDCCH, the eNB can carry configuration information of the receiving window on resources in the same PDCCH/ePDCCH.

### Example III

This example shows that UE detects D2D discovery sequences according to related information of the configured receiving window. After the UE receives the related information of the receiving window configured by an eNB, when D2D discovery sequences are detected, it determines starting and terminating points of a time window for detecting discovery sequences according to uplink transmission timing of an uplink between the UE and the eNB and the configured receiving window.

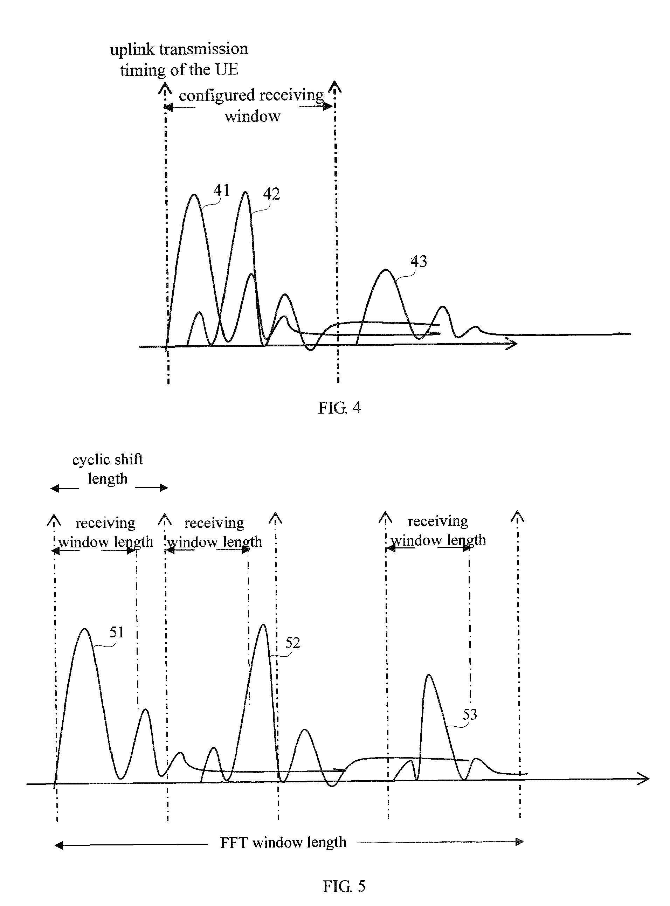

As shown in Fig. 4, signals of a discovery sequence 41 and a discovery sequence 42 fall within the receiving window; the UE can match the signals in the configured receiving window to obtain a correlation peak, so as to demodulate the discovery sequences. In addition, a signal of a discovery sequence 43 falls out of the receiving window, and according to an implementation of this example, the UE does not detect a signal out of the receiving window.

In another implementation of this example, if different D2D discovery sequences are distinguished by different cyclic shifts, it is possible that the UE can obtain correlation values of a plurality of D2D discovery sequences only via one correlation process at the same timing. At this time, the UE can only pick up a correlation value within the configured receiving window. As shown in Fig. 5, different D2D discovery sequences are within one FFT window length, correlation peaks exist in different time axis positions. The correlation peaks of each sequence are located within the range of a time axis corresponding to its cyclic shift. A starting point of the configured receiving window is a starting position of the range of each time axis, and a terminating point thereof is at the length of the configured receiving window after the starting position. As shown in Fig. 5, correlation peaks of a D2D discovery sequence 51 and a D2D discovery sequence 53 fall within the receiving window, and correlation peak of a D2D discovery sequence 52 fall out of the receiving window. In an implementation, although the UE can detect the discovery sequence, it does not pick up the discovery sequence or not report the related information of the discovery sequence. In another implementation, the UE can set a threshold value of the correlation values (such as a threshold value of signal intensities) of the discovery sequence out of the receiving window; for example, a threshold value θ is set, if and only if the correlation values of the discovery sequence out of the receiving window exceed the threshold value, sorting, selecting or reporting of the related information can be performed on the discovery sequence. The above content is just illustrative, and this embodiment of the present disclosure is not limited thereto. As to other discovery sequences, such as M sequences or Gold sequences are used, if a fast algorithm, such as an FFT algorithm, is used, the principle thereof is similar, which is not described redundantly herein.

It can be known from Example I to Example III that, with the methods in Embodiments 2 and 3, an eNB configures a receiving window for detecting discovery sequences for UE, and the UE determines a time window for detecting the discovery sequences according to the receiving window and uplink transmission timing of an uplink between the UE and the eNB, detects the discovery sequences within the time window, and selects and reports a detection result according to predetermined measurement, thereby not only reducing the complexity of detecting, by UE, discovery sequences of other UEs and shortening the time of detecting, by UE, discovery sequences of other UEs, but also reducing signaling for reporting, by UE, detection information of discovery sequences.

An embodiment of the present disclosure also provides a D2D UE, which is described as the following Embodiment 4. Since the principle of solving the technical problem of the D2D UE is similar to that of the method in Embodiment 1, a specific implementation thereof can refer to the implementation of the method in Embodiment 1, and the same content will not be described redundantly.

### Embodiment 4

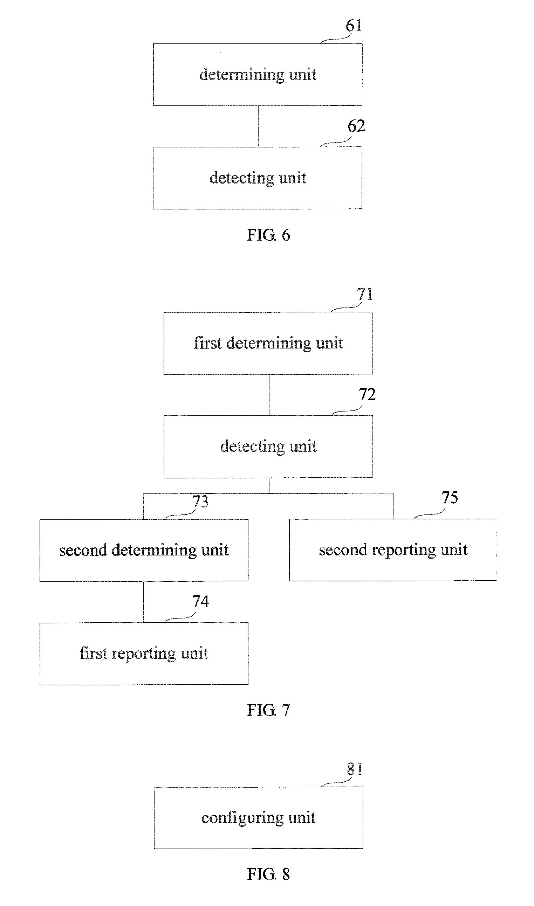

An embodiment of the present disclosure provides a D2D UE. Fig. 6 is a schematic diagram of the structure of the D2D UE. As shown in Fig. 6, the UE includes:
a determining unit 61, configured to determine a starting point of a time window for detecting discovery sequences, according to uplink transmission timing of an uplink between the UE and an eNB of an LTE system; and
a detecting unit 62, configured to detect discovery sequences of other D2D UEs at the starting point of the time window determined by the determining unit 61.

In this embodiment, the determining unit 61 can take the uplink transmission timing as the starting point of the time window, or can take time combining the uplink transmission timing and a predetermined time offset as the starting point of the time window.

The D2D UE of this embodiment determines a time window for detecting D2D discovery sequences by taking uplink transmission timing of an uplink between the D2D UE and the eNB in an LTE system as a reference, thereby reducing the complexity of detecting, by UE, discovery sequences of other UEs, shortening the time of detecting, by UE, discovery sequences of other UEs.

An embodiment of the present disclosure also provides a D2D UE, which is described as the following Embodiment 5. Since the principle of solving the technical problem of the D2D UE is similar to that of the method in Embodiment 2, a specific implementation thereof can refer to the implementation of the method in Embodiment 2, and the same content will not be described redundantly.

### Embodiment 5

An embodiment of the present disclosure provides a D2D UE. Fig. 7 is a schematic diagram of the structure of the D2D UE. As shown in Fig. 7, the UE includes:
a first determining unit 71, configured to determine starting and terminating positions of a time window for detecting discovery sequences, according to uplink transmission timing of an uplink between the UE and an eNB of an LTE system and received configuration information of a receiving window; and
a detecting unit 72, configured to detect discovery sequences of other D2D UEs at the starting and terminating positions of the time window determined by the first determining unit 71.

In this embodiment, the configuration information of the receiving window can be a total length of a backward received signal along a time axis direction taking the uplink transmission timing as the starting position of the time window; in this embodiment, the configuration information of the receiving window can also be a maximum offset of a staring point of a backward received signal along a time axis direction taking the uplink transmission timing as the starting position of the time window.

In this embodiment, the configuration information of the receiving window can be configured by the eNB via high-layer signaling or can be configured by the eNB via dynamic signaling of a physical layer.

In this embodiment, the signaling of the receiving window can be UE-specific or cluster-specific.

In an implementation, the UE further includes:
a second determining unit 73, configured to determine whether signal intensities of the detected discovery sequences exceed a predetermined threshold value when the detecting unit 72 detects discovery sequences out of the time window; and
a first reporting unit 74, configured to take the detected discovery sequences as selected objects when the signal intensities of the detected discovery sequences exceed the predetermined threshold value, and select a predetermined number of discovery sequences of highest signal intensity from all the detected discovery sequences to report to the eNB or corresponding D2D UE.

In this implementation, the UE sets a threshold value for determining whether discovery sequences detected out of the receiving window are taken as selected objects, and when and only when the signal intensities of the discovery sequences exceed the threshold value, discovery sequences are taken as the selected objects.

In another implementation, the UE further includes:
a second reporting unit 75, configured to, when the detecting unit 72 detects discovery sequences out of the time window, select a predetermined number of discovery sequences of highest signal intensity from all the discovery sequences detected within the time window to report to the eNB or corresponding D2D UE.

In this implementation, even if the UE detects discovery sequences out of the receiving window, the discovery sequences are not taken as selected objects, but the discovery sequences needing to be reported are selected from the discovery sequences detected within the receiving window, thereby saving report overhead.

The D2D UE of this embodiment determines a time window for detecting D2D discovery sequences by taking uplink transmission timing of an uplink between the D2D UE and an eNB of an LTE system and the received configuration information of a receiving window as a reference, thereby reducing the complexity of detecting, by UE, discovery sequences of other UEs, shortening the time of detecting, by UE, discovery sequences of other UEs, and reducing overhead of reporting, by UE, detection information of the discovery sequences.

An embodiment of the present disclosure also provides an eNB in an LTE system, which is described as the following Embodiment 6. Since the principle of solving the technical problem of the eNB in the LTE system is similar to that of the method in Embodiment 3, a specific implementation thereof can refer to the implementation of the method in Embodiment 3, and the same content will not be described redundantly.

### Embodiment 6

An embodiment of the present disclosure provides an eNB in an LTE system. Fig. 8 is a schematic diagram of the structure of the eNB. As shown in Fig. 8, the eNB includes:
a configuring unit 81 configured to configure a receiving window for UE within a coverage of the eNB in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

The eNB of this embodiment configures a receiving window for UE performing D2D communication, and thus, the UE can determine a time window for detecting D2D discovery sequences according to the configured receiving window and uplink transmission timing of an uplink between the D2D UE and an eNB of an LTE system and detect the discovery sequences at the determined time window, thereby reducing the complexity of detecting, by UE, discovery sequences of other UEs, shortening the time of detecting, by UE, discovery sequences of other UEs, and reducing signaling for reporting, by UE, detection information of discovery sequences.

### Embodiment 7

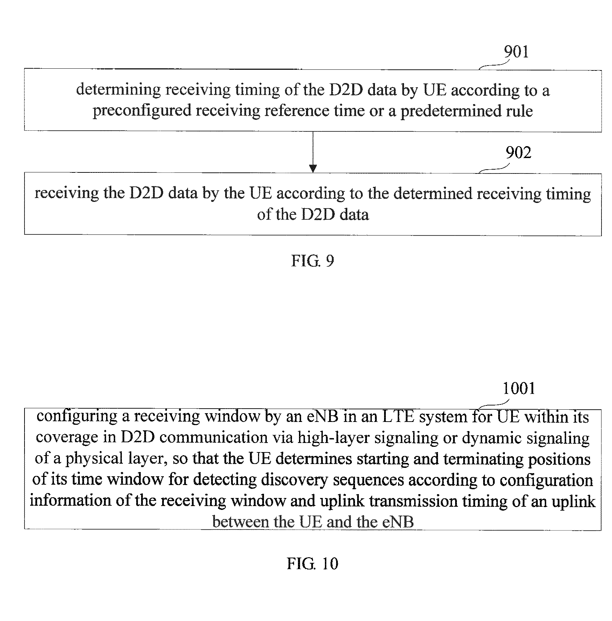

An embodiment of the present disclosure provides a method for receiving D2D data. Fig. 9 is a flowchart of the method. As shown in Fig. 9, the method includes:
step 901: determining receiving timing of the D2D data by UE according to a preconfigured receiving reference time or a predetermined rule; and
step 902: receiving the D2D data by the UE according to the determined receiving timing of the D2D data.

In this embodiment, the predetermined rule can be taking uplink transmission timing of an uplink between the UE and an eNB of an LTE system as the receiving timing of the D2D data, or be taking downlink transmission timing of a downlink between the UE and an eNB of an LTE system as the receiving timing of the D2D data. According to the predetermined rule, the UE can determine time (the receiving timing) of receiving D2D data thereby, and the D2D data can be received at the determined time for receiving the D2D data, thereby capable of reducing the complexity of the transmission/receiving timing of the UE.

In this embodiment, the preconfigured receiving reference time can be configured by the eNB or other D2D UEs via high-layer signaling or is configured by the eNB via dynamic signaling of a physical layer, or can be configured by the UE to other D2D UEs in a group or cluster via high-layer signaling or dynamic signaling of a physical layer.

In this case, the preconfigured receiving reference time is a predefined reference time or a predetermined time offset based on a predefined reference time. For example, the predefined reference time can be uplink transmission timing of an uplink between the UE and the eNB or downlink receiving timing of a downlink between the UE and the eNB.

With the method of this embodiment, the receiving timing of D2D data is set, thereby capable of reducing the complexity of the receiving timing of the UE.

### Embodiment 8

An embodiment of the present disclosure provides a method for configuring a receiving reference time of D2D data. Fig. 10 is a flowchart of the method. As shown in Fig. 10, the method includes:
step 1001: configuring a receiving reference time by an eNB in an LTE system for UE within its coverage in D2D communication via high-layer signaling or dynamic signaling of a physical layer, so that the UE determines a receiving time for receiving D2D communication data according to configuration information of the receiving reference time.

In this embodiment, the configuration information of the receiving reference time can be a predefined reference time or a predetermined time offset based on a predefined reference time. For example, the time offset can be a predefined step length or a few types of predefined time.

In this embodiment, for example, the predefined reference time can be uplink transmission timing of an uplink between the UE and the eNB or downlink receiving timing of a downlink between the UE and the eNB.

With the method of this embodiment, a receiving reference time is configured for UE performing D2D communication, and the UE can determine receiving timing of receiving D2D data thereby according to the configured receiving reference time and receive the D2D data at the determined receiving timing, thereby reducing the complexity of the receiving timing of the UE.

In order to make the methods in Embodiments 7 and 8 more clear and understandable, the methods in Embodiments 7 and 8 will be described in combination with specific examples hereinafter.

### Example IV

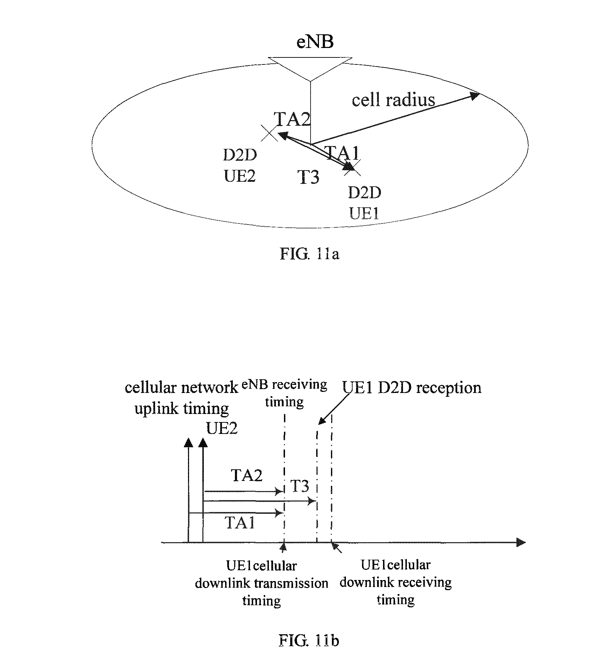

This example shows that an eNB configures a receiving reference time of receiving timing of D2D data. In this example, two D2D UEs are located at the center of an LTE cellular network cell and is positioned two sides of the eNB respectively. In this case, the distance between the D2D UEs cannot be ignored with respect to the distance between the eNB and the D2D UEs. As shown in Figs. 11 a and 11b, assuming that the D2D UE 2 transmits data to the D2D UE 1 and the UE 2 takes uplink transmission timing TA2 of an uplink between it and the eNB of the LTE system as transmission timing of the D2D data, then the time T3 that the data arrives at the D2D UE 1 is between downlink receiving time of a downlink between the D2D UE 1 and the eNB of the LTE system and downlink transmission time of the downlink between the D2D UE 1 and the eNB of the LTE system. Therefore, the receiving time of D2D UE 1 can be configured as downlink transmission timing of the downlink of the eNB of the LTE system assumed by the UE, that is, the UE 1 starts to receive the D2D data from the downlink transmission timing of the eNB in a cellular network estimated thereby. Or, more accurately, the receiving time of the D2D UE 1 is configured as taking downlink receiving timing of receiving an eNB signal by the UE as a reference, a certain amount of time is advanced based on the reference, that is, the UE 1 starts to receive the D2D data from an amount of time before the downlink receiving timing of the eNB in a cellular network estimated thereby, wherein, the specific time amount is configured by the eNB. In this example, the information serving as the receiving reference time can be configured via high-layer signaling or dynamic signaling of a physical layer by the eNB, or via high-layer signaling or dynamic signaling of a physical layer by other UEs.

### Example V

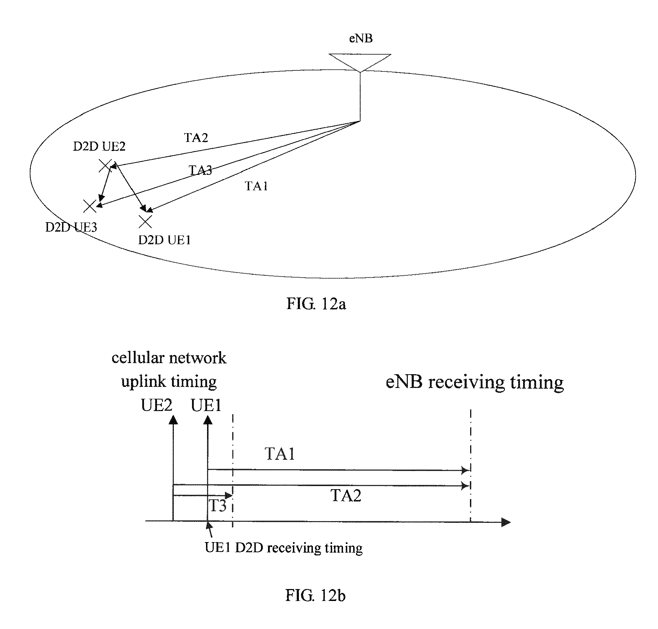

This example shows that an eNB configures a receiving reference time of receiving timing of D2D data. In this example, two D2D UEs are located at the edge of an LTE cellular network cell. In this case, the distance between the UEs and the eNB is much greater than the distance between the D2D UEs, as shown in Fig. 12a.

When UE 2 transmits D2D data to UE 1, the UE 2 takes uplink transmission timing TA2 of an uplink between it and the eNB of the LTE system as transmission timing, then the time T3 that the data arrives at the D2D UE 1 is after uplink transmission time TA1 of an uplink between the D2D UE 1 and the eNB in the LTE system, as shown in Fig. 12b. In this case, the receiving time can be configured as uplink transmission timing TA1 of the uplink between the D2D UE 1 and the eNB of the LTE system, that is, the UE 1 starts to receive the D2D data from a starting point of the TA1.

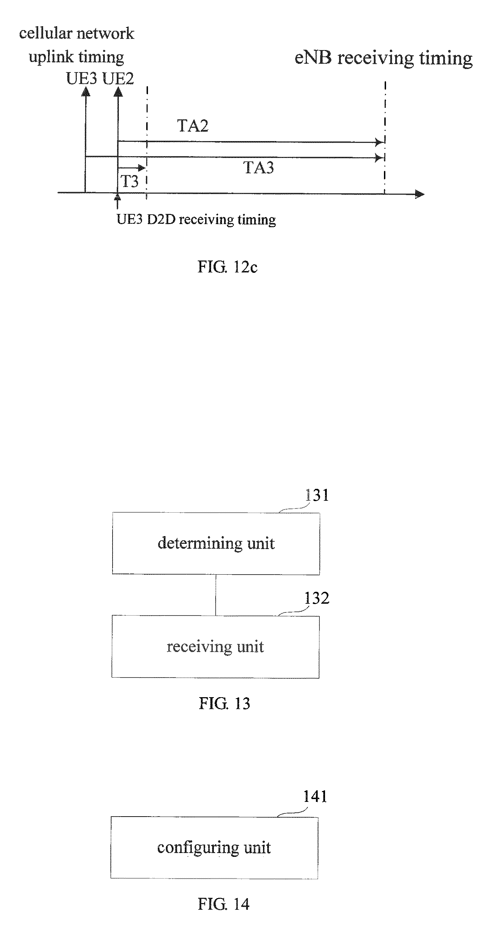

When UE 2 transmits D2D data to UE 3, the UE 2 takes uplink transmission timing TA2 of an uplink between it and the eNB of the LTE system as transmission timing, then the time T3 that the data arrives at the D2D UE 3 is after uplink transmission time TA2 of an uplink between the D2D UE 2 and the eNB of the LTE system, as shown in Fig. 12c. In this case, the receiving time of the D2D UE 3 can be configured as uplink transmission timing TA2 of the uplink between the D2D UE 2 and the eNB of the LTE system, that is, the UE 3 starts to receive the D2D data from the TA2; or, the receiving time of the D2D UE 3 can be configured as taking uplink transmission timing TA3 of an uplink between the UE 3 and the eNB of the LTE system as a reference, a certain amount of time is delay based on the reference, that is, the UE 3 starts to receive the D2D data from an amount of time after a starting point of the TA3, wherein, the specific time amount is configured by the eNB.

It can be seen from Figs. 12b and 12c that more reasonable receiving timing is different in different situations, and the receiving timing can be configured by an eNB for D2D UE.

In this example, the configuration time can also be configured by D2D transmission UE for D2D receiving UE. For example, as shown in the situation of Fig. 12b, the receiving timing can be configured by the D2D transmission UE 2 for D2D receiving UE 1 as a certain amount of time is delay based on a reference and taking the uplink transmission timing TA1 of the uplink between the UE1 and the eNB of the LTE system as the reference.

It can be known from Example IV to Example V that, with the methods in Embodiments 7 and 8, an eNB or D2D UE configures a receiving reference time for determining receiving timing for other D2D UEs, and the UE determines the receiving timing according to the receiving reference time, and receives D2D data according to the determined receiving timing, thereby reducing the complexity of transmission timing and the receiving timing of the UE.

An embodiment of the present disclosure also provides a D2D UE, which is described as the following Embodiment 9. Since the principle of solving the technical problem of the D2D UE is similar to that of the method in Embodiment 7, a specific implementation thereof can refer to the implementation of the method in Embodiment 7, and the same content will not be described redundantly.

### Embodiment 9

An embodiment of the present disclosure provides D2D UE. Fig. 13 is a schematic diagram of the structure of the D2D UE. As shown in Fig. 13, the UE includes:
a determining unit 131, configured to determine receiving timing of D2D data according to a preconfigured receiving reference time or a predetermined rule; and
a receiving unit 132, configured to receive the D2D data according to the receiving timing of the D2D data determined by the determining unit 131.

In this embodiment, the predetermined rule can be taking uplink transmission timing of an uplink between the UE and an eNB of an LTE system as the receiving timing of the D2D data, or can be taking downlink transmission timing of a downlink between the UE and an eNB of an LTE system as the receiving timing of the D2D data.

In this embodiment, the preconfigured receiving reference time can be configured by the eNB or other D2D UEs via high-layer signaling or is configured by the eNB via dynamic signaling of a physical layer, or the preconfigured receiving reference time can be configured by the UE to other D2D UEs in a group or cluster via high-layer signaling or dynamic signaling of a physical layer.

In this embodiment, the preconfigured receiving reference time can be a predefined reference time or a predetermined time offset based on the predefined reference time.

In this embodiment, the predefined reference time can be uplink transmission timing of an uplink between the UE and the eNB or downlink receiving timing of a downlink between the UE and the eNB.

With the D2D UE of this embodiment, the receiving timing is determined according to configured receiving reference time or a predetermined rule, and the D2D data is received according to the determined receiving timing, thereby simplifying the receiving process of D2D data and reducing the complexity of transmission timing and the receiving timing of the UE.

An embodiment of the present disclosure also provides an eNB in an LTE system, which is described as the following Embodiment 10. Since the principle of solving the technical problem of the eNB in the LTE system is similar to that of the method in Embodiment 8, a specific implementation thereof can refer to the implementation of the method in Embodiment 8, and the same content will not be described redundantly.

### Embodiment 10

An embodiment of the present disclosure provides an eNB in an LTE system. Fig. 14 is a schematic diagram of the structure of the eNB. As shown in Fig. 14, the eNB includes:
a configuring unit 141, configured to configure a receiving reference time for UE within a coverage of the eNB in D2D communication via high-layer signaling or dynamic signaling of a physical layer, so that the UE determines a receiving time for receiving D2D communication data according to configuration information of the receiving reference time.

In this embodiment, the configuration information of the receiving reference time can be a predefined reference time or a predetermined time offset based on the predefined reference time.

In this embodiment, the predefined reference time can be uplink transmission timing of an uplink between the UE and the eNB or downlink receiving timing of a downlink between the UE and the eNB.

The eNB of this embodiment configures a receiving reference time for UE, and the UE can determine the receiving timing according to receiving reference time and receive D2D data according to the determined receiving timing, thereby reducing the complexity of transmission timing and the receiving timing of the UE.

An embodiment of the present disclosure provides a communication system, including at least one UE as described in embodiment 4 or embodiment 5 or embodiment 9, or including at least one UE as described in embodiment 4 or embodiment 5 or embodiment 9 and the eNB as described in embodiment 6 or embodiment 10.

An embodiment of the present disclosure provides a computer-readable program, wherein when the program is executed in terminal equipment, the program enables a computer to carry out the method for detecting D2D discovery sequences as described in embodiment 1 or embodiment 2, or the method for receiving D2D data as described in embodiment 7, in the terminal equipment.

An embodiment of the present disclosure provides a storage medium in which a computer-readable program is stored, wherein the computer-readable program enables a computer to carry out the method for detecting D2D discovery sequences as described in embodiment 1 or embodiment 2, or the method for receiving D2D data as described in embodiment 7, in terminal equipment.

An embodiment of the present disclosure provides a computer-readable program, wherein when the program is executed in an eNB, the program enables a computer to carry out the method for configuring a receiving window in D2D communication as described in embodiment 3, or the method for configuring a receiving reference time of D2D data as described in embodiment 8, in the eNB.

An embodiment of the present disclosure provides a storage medium in which a computer-readable program is stored, wherein the computer-readable program enables a computer to carry out the method for configuring a receiving window in D2D discovery communication as described in embodiment 3, or the method for configuring a receiving reference time of D2D data as described in embodiment 8, in a UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A method for detecting D2D (Device to Device) discovery sequences, comprising:
determining, by D2D UE (User Equipment), a starting point of a time window for detecting discovery sequences, according to uplink transmission timing of an uplink between the UE and an eNB of an LTE (Long Term Evolution) system; and
detecting discovery sequences of other D2D UEs by the D2D UE at the determined starting point of the time window.

2. The method according to claim 1, wherein
the D2D UE takes the uplink transmission timing as the starting point of the time window; or
the D2D UE takes a predetermined time offset of the uplink transmission timing as the starting point of the time window.

3. A method for detecting D2D discovery sequences, comprising:
determining, by D2D UE, starting and terminating positions of a time window for detecting discovery sequences, according to uplink transmission timing of an uplink between the UE and an eNB of an LTE system and received configuration information of a receiving window; and
detecting discovery sequences of other D2D UEs by the D2D UE at the determined starting and terminating positions of the time window.

4. The method according to claim 3, wherein the configuration information of the receiving window is:
a total length of a backward received signal along a time axis direction taking the uplink transmission timing as the starting position of the time window; or
a maximum offset of a staring point of a backward received signal along a time axis direction taking the uplink transmission timing as the starting position of the time window.

5. The method according to claim 3, wherein the configuration information of the receiving window is configured by the eNB via high-layer signaling or is configured by the eNB via dynamic signaling of a physical layer.

6. The method according to claim 5, wherein the signaling of the receiving window is UE-specific or cluster-specific.

7. The method according to claim 3, wherein if the D2D UE detects discovery sequences out of the time window, the method further comprises:
determining whether signal intensities of the detected discovery sequences exceed a predetermined threshold value; and
taking the detected discovery sequences as selected objects if exceed the predetermined threshold value, and selecting a predetermined number of discovery sequences of highest signal intensity from all the detected discovery sequences to report to the eNB or corresponding D2D UE.

8. The method according to claim 3, wherein if the D2D UE detects discovery sequences out of the time window, the method further comprises:
selecting a predetermined number of discovery sequences of highest signal intensity from all the discovery sequences detected within the time window to report to the eNB or corresponding D2D UE.

9. A D2D UE, comprising:
a determining unit configured to determine a starting point of a time window for detecting discovery sequences, according to uplink transmission timing of an uplink between the UE and an eNB of an LTE system; and
a detecting unit configured to detect discovery sequences of other D2D UEs at the starting point of the time window determined by the determining unit.

10. The UE according to claim 9, wherein
the determining unit takes the uplink transmission timing as the starting point of the time window; or
the determining unit takes a predetermined time offset of the uplink transmission timing as the starting point of the time window.

11. A D2D UE, comprising:
a first determining unit configured to determine starting and terminating positions of a time window for detecting discovery sequences, according to uplink transmission timing of an uplink between the UE and an eNB of an LTE system and received configuration information of a receiving window; and
a detecting unit configured to detect discovery sequences of other D2D UEs at the starting and terminating positions of the time window determined by the first determining unit.

12. The UE according to claim 11, wherein the configuration information of the receiving window is:
a total length of a backward received signal along a time axis direction taking the uplink transmission timing as the starting position of the time window; or
a maximum offset of a staring point of a backward received signal along a time axis direction taking the uplink transmission timing as the starting position of the time window.

13. The UE according to claim 11, wherein the configuration information of the receiving window is configured by the eNB via high-layer signaling or is configured by the eNB via dynamic signaling of a physical layer.

14. The UE according to claim 11, wherein the signaling of the receiving window is UE-specific or cluster-specific.

15. The UE according to claim 11, wherein the UE further comprises:
a second determining unit configured to determine whether signal intensities of the detected discovery sequences exceed a predetermined threshold value when the detecting unit detects discovery sequences out of the time window; and
a first reporting unit configured to take the detected discovery sequences as selected objects when the signal intensities of the detected discovery sequences exceed the predetermined threshold value, and select a predetermined number of discovery sequences of highest signal intensity from all the detected discovery sequences to report to the eNB or corresponding D2D UE.

16. The UE according to claim 11, wherein the UE further comprises:
a second reporting unit configured to, when the detecting unit detects discovery sequences out of the time window, select a predetermined number of discovery sequences of highest signal intensity from all the discovery sequences detected within the time window to report to the eNB or corresponding D2D UE.

17. A method for receiving D2D data, comprising:
determining receiving timing of the D2D data by UE according to a preconfigured receiving reference time or a predetermined rule; and
receiving the D2D data by the UE according to the determined receiving timing of the D2D data.

18. The method according to claim 17, wherein the predetermined rule is: taking uplink transmission timing of an uplink between the UE and an eNB of an LTE system as the receiving timing of the D2D data, or the predetermined rule is: taking downlink transmission timing of a downlink between the UE and an eNB of an LTE system as the receiving timing of the D2D data.

19. The method according to claim 17, wherein the preconfigured receiving reference time is configured by the eNB or other D2D UEs via high-layer signaling or is configured by the eNB via dynamic signaling of a physical layer, or the preconfigured receiving reference time is configured by the UE to other D2D UEs in a group or cluster via high-layer signaling or dynamic signaling of a physical layer.

20. The method according to claim 19, wherein the preconfigured receiving reference time is a predefined reference time or a predetermined time offset based on a predefined reference time.

21. The method according to claim 19, wherein the predefined reference time is uplink transmission timing of an uplink between the UE and the eNB or downlink receiving timing of a downlink between the UE and the eNB.

22. A D2D UE, comprising:
a determining unit configured to determine receiving timing of D2D data according to a preconfigured receiving reference time or a predetermined rule; and
a receiving unit configured to receive the D2D data according to the receiving timing of the D2D data determined by the determining unit.

23. The UE according to claim 22, wherein the predetermined rule is: taking uplink transmission timing of an uplink between the UE and an eNB of an LTE system as the receiving timing of the D2D data, or the predetermined rule is: taking downlink transmission timing of a downlink between the UE and an eNB of an LTE system as the receiving timing of the D2D data.

24. The UE according to claim 22, wherein the preconfigured receiving reference time is configured by the eNB or other D2D UE via high-layer signaling or is configured by the eNB via dynamic signaling of a physical layer, or the preconfigured receiving reference time is configured by the UE to other D2D UEs in a group or cluster via high-layer signaling or dynamic signaling of a physical layer.

25. The UE according to claim 24, wherein the preconfigured receiving reference time is a predefined reference time or a predetermined time offset based on a predefined reference time.

26. The UE according to claim 25, wherein the predefined reference time is uplink transmission timing of an uplink between the UE and the eNB or downlink receiving timing of a downlink between the UE and the eNB.

27. A method for configuring a receiving window of D2D discovery sequences, comprising:
configuring a receiving window by an eNB in an LTE system for UE within its coverage in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

28. The method according to claim 27, wherein the configuration information of the receiving window is UE-specific or cluster-specific.

29. An eNB in an LTE system, comprising:
a configuring unit configured to configure a receiving window for UE within a coverage of the eNB in D2D communication via high-layer signaling or dynamic signaling of a physical layer, so that the UE determines starting and terminating positions of its time window for detecting discovery sequences according to configuration information of the receiving window and uplink transmission timing of an uplink between the UE and the eNB.

30. The eNB according to claim 29, wherein the configuration information of the receiving window is UE-specific or cluster-specific.

31. A method for configuring a receiving reference time of D2D data, comprising:
configuring a receiving reference time by an eNB in an LTE system for UE within its coverage in D2D communication via high-layer signaling or dynamic signaling of a physical layer, so that the UE determines a receiving time for receiving D2D communication data according to configuration information of the receiving reference time.

32. The method according to claim 31, wherein the configuration information of the receiving reference time is a predefined reference time or a predetermined time offset based on a predefined reference time.

33. The method according to claim 32, wherein the predefined reference time is uplink transmission timing of an uplink between the UE and the eNB or downlink receiving timing of a downlink between the UE and the eNB.

34. An eNB in an LTE system, comprising:
a configuring unit configured to configure a receiving reference time for UE within a coverage of the eNB in D2D communication via high-layer signaling or dynamic signaling of a physical layer, so that the UE determines a receiving time for receiving D2D communication data according to configuration information of the receiving reference time.

35. The eNB according to claim 34, wherein the configuration information of the receiving reference time is a predefined reference time or a predetermined time offset based on a predefined reference time.

36. The eNB according to claim 35, wherein the predefined reference time is uplink transmission timing of an uplink between the UE and the eNB or downlink receiving timing of a downlink between the UE and the eNB.

37. A communication system, comprising at least one UE as claimed in any one of claims 9-16 and 22-26, or comprising at least one UE as claimed in any one of claims 9-16 and 22-26 and the eNB as claimed in any one of claims 29-30 and 34-36.

38. A computer-readable program, wherein when the program is executed in terminal equipment, the program enables a computer to carry out the method for detecting D2D discovery sequences as claimed in any one of claims 1-8, or the method for receiving D2D data as claimed in any one of claims 17-21, in the terminal equipment.

39. A storage medium in which a computer-readable program is stored, wherein the computer-readable program enables a computer to carry out the method for detecting D2D discovery sequences as claimed in any one of claims 1-8, or the method for receiving D2D data as claimed in any one of claims 17-21, in terminal equipment.

40. A computer-readable program, wherein when the program is executed in an eNB, the program enables a computer to carry out the method for configuring a receiving window of D2D discovery sequences as claimed in any one of claims 27-28, or the method for configuring a receiving reference time of D2D data as claimed in any one of claims 31-33, in the eNB.

41. A storage medium in which a computer-readable program is stored, wherein the computer-readable program enables a computer to carry out the method for configuring a receiving window of D2D discovery sequences as claimed in any one of claims 27-28, or the method for configuring a receiving reference time of D2D data as claimed in any one of claims 31-33, in an eNB.
